(19) Europäisches Patentamt
European Patent Office
Office européen des brevets

(11) Publication number: **0 340 309**
**A1**

(12) **EUROPEAN PATENT APPLICATION**
published in accordance with Art. 158(3) EPC

(21) Application number: **88908384.6**

(51) Int. Cl.$^3$: **G 01 F 23/22**

(22) Date of filing: **30.09.88**

Data of the international application taken as a basis:

(86) International application number:
**PCT/JP88/00997**

(87) International publication number:
**WO89/03021 (06.04.89 89/08)**

(30) Priority: **02.10.87 JP 250117/87**
**07.06.88 JP 140017/88**
**07.06.88 JP 140019/88**
**22.06.88 JP 153933/88**

(43) Date of publication of application:
**08.11.89 Bulletin 89/45**

(84) Designated Contracting States:
**AT BE CH DE FR GB IT LI LU NL SE**

(71) Applicant: **Matsushita Electric Industrial Co., Ltd.**
**1006, Oaza Kadoma**
**Kadoma-shi Osaka-fu, 571(JP)**

(72) Inventor: **URIU, Eiichi**
**2-17-5, Higashikouri**
**Hirakata-shi Osaka-fu 573(JP)**

(72) Inventor: **NISHIDA, Kouji**
**17-6, Yuyamadai 2-chome**
**Kawanishi-shi Hyogo-ken 666-01(JP)**

(72) Inventor: **TABATA, Munehiro**
**2-12-402, Shinkoriyama**
**Ibaraki-shi Osaka-fu 567(JP)**

(74) Representative: **Smith, Norman Ian et al,**
**F.J. CLEVELAND & COMPANY 40-43 Chancery Lane**
**London WC2A 1JQ(GB)**

(54) **HEAT-SENSITIVE FUEL QUANTITY DETECTOR.**

(57) A fuel quantity detector for detecting the quantity of remaining fuel in a fuel tank of an automobile or the like according to the present invention is intended to detect at any environmental temperature or fuel temperature, accurately the quantity of the remaining fuel with a low current and high reliability and to eliminate defects of thermistor system or metallic wire system detectors. In the present invention, a heat-sensitive resistance bulb having a large resistance temperature coefficient for self-heat generation is formed on a support substrate and a change in the heat-sensitive resistance due to cooling of the portion dipped into the fuel by the heat of vaporization is detected as a differential output voltage. A heat-sensitive resistance bulb for correcting temperature is disposed on the support substrate in order to prevent any error of the differential output voltage that may be caused by the correction of the temperature inside the fuel tank.

./...

EP 0 340 309 A1

FIG. 2

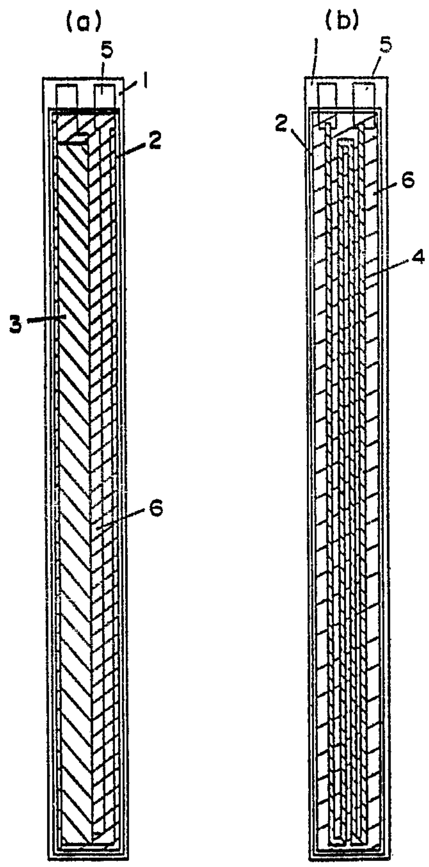

0340309

# SPECIFICATION

# THERMAL FUEL LEVEL DETECTOR

## BACKGROUND OF THE INVENTION

### FIELD OF THE INVENTION

The present invention relates to a thermal fuel level detector capable of detecting the residual fuel level in a fuel tank of an automobile or the like.

### RELATED ART STATEMENT

Hitherto, most of fuel level detectors of the type described above comprises a slide-content type potentiometer attached to an end of a fuel level float. A conventional structure in which such a potentiometer is employed involves a problem of defective contact therein due to sulfides or other additives contained in fuel since the contact thereof is exposed to the fuel or steam. It leads to a problem that the conventional structure cannot maintain its accurate slide-resistance values for a long time.

Another problems is experienced with the conventional structure in that it is difficult to obtain the shape of the resistor which corresponds to the shape of the fuel tank, causing a large error in detection of a fuel level.

Although a variety of methods have been devised in order to overcome the above-described problems, any of them has not been put into practice as yet in terms of the cost and performance. For example, a liquid level sensor disclosed in Japanese Patent Laid-Open No. 59-148826 and structured such that thermistor layers are successively formed on a rod-like or an elongated insulating material can relatively accurately detect the liquid level under certain temperature conditions. However, since thermistors cannot display the linearity in change in resistance values with respect to changes in temperature, such liquid level sensors cannot accurately detect the continuous change in liquid level in a case wherein the temperature of the liquid or the ambient temperature changes even if a temperature compensating sensor is additionally provided. The thermistors further involves a problem of an insufficient reliability against gasoline containing sulfides, more particularly against light oil. Therefore, such liquid level sensor cannot be used as a fuel level detector for an automobile.

Furthermore, the Nippon Denso Publication Technology Monogram (No. 48-101, published on July 15, 1986) discloses a system formed, as shown in Fig. 1, such that: one of two metal wires made of the same material and having the same temperature resistance coefficient is arranged to be a spontaneously heated sensing resistance wire 40, another one is arranged to be a temperature compensating resistance wire 41; the spontaneously heated sensing resistance wire 40 is in part dipped in the liquid fuel; external resistors 42 and 43 whose resistance values are the same are used with the former to form a bridge circuit; the potential difference between junctions 44 and 45 is amplified by a differential amplifier 46 as to detect a difference in spontaneously heated temperature by the resistance wires as a potential difference, so that the level of the liquid is detected. However, this system involves two serious problems. A problem arises in that since the temperature compensating resistance wire 41 is disposed in part in the fuel tank in which the same is not dipped in the liquid fuel, although a correction to compensate a change in ambient temperature can be conducted, the correction to compensate a change in the temperature of the liquid fuel cannot be performed. Another problems arises in that since metal wires are used, the resistance value per unit length of the same becomes excessively low even if the diameter of the wire is reduced as small as possible while the strength of the metal wire can be ensured. It leads a problem that the power consumption required for the above-described system becomes excessive for the case where the car battery is used as the power source of this system. Therefore, such a system cannot be put to practical use.

SUMMARY OF THE INVENTION

To this end, an object of the present invention is to provide a fuel level detector which can accurately detect a fuel level with a reduced power consumption exhibiting an improved reliability regardless of the ambient temperatures and the temperatures of liquid fuel in order to overcome the problems of defective contact involved in a thermistor method and a metal wire method.

In order to overcome the above-described problem, the present invention is characterized in that a spontaneously heating sensing resistor having a relatively high temperature resistance coefficient is formed on a substrate so as to detect a change in the resistance value of the sensing resistor due to cooling by heat of vaporization at a portion of the sensing resistor 20 which is dipped in fuel, as a differential output voltage. In order to prevent error in the differential output voltage due to the correction of the ambient temperature in the fuel tank, a temperature compensating resistor is provided on the substrate.

According to the present invention, since the spontaneously heated sensing resistor which can radiate heat when it is energized and the temperature compensating resistor are formed so as to have the same length, and since the above-described two temperature compensating resistors comprise film resistors made of platinum, gold, silver, palladium, ruthenium oxide, copper, nickel, steel or an alloy composition which in main contains thereof, a fuel level can be accurately detected even if the ambient temperature and/or the temperature of the liquid fuel in the fuel tank is changed.

Furthermore, since the spontaneously heated sensing resistor and the temperature compensating resistor are formed of film resistors, the resistance value per unit length can be enlarged in comparison with the case of the metal wire. Therefore, a temperature detecting fuel level detector exhibiting reduced power consumption and having a practical advantage can be obtained.

Furthermore, a further accurate, high sensitive, reduced cost temperature detecting fuel level detector can be obtained in the case where the above-described temperature detecting resistor film is formed by a plating process or by baking the coated and printed metallo-organic substance, or in the case where the above-described temperature detecting element is formed in a chip shape and the thus-formed chip-shaped temperature detecting element is mounted on a substrate made of epoxy glass, polyethylene telephthalate (PET), polyester, polyimide, denatured materials of the former materials, polyparabanic acid, aramid film, bismuthreimide triazine resin (manufactured by Mitsubishi Gas Chemical Industries Ltd.), Bectra (manufactured by Poly Plastic), polyacetal, glass, or the like.

BRIEF DESCRIPTION OF THE DRAWINGS

Fig. 1 is a circuit diagram for use in a conventional fuel level detector comprising metal wires;

Figs. 2A and 2B are plan views which illustrate detection portions for use in a fuel level detector according to an embodiment of the present invention;

Fig. 3 is a perspective view which illustrates a state where the detection portion is attached in a fuel tank;

Fig. 4 is a circuit diagram for use in the fuel level detector;

Fig. 5 is a plan view which illustrates a detection portion of a temperature detecting fuel level detector in which a spontaneously heated sensing resistor 3 and a temperature compensating resistor are formed on one insulating substrate;

Figs. 6A and 6B are plan views which illustrate a detection portion of a temperature detecting fuel level detector formed by mounting a temperature detecting resistor chip on a substrate;

Fig. 7 is a plan view which illustrates a detection portion of a temperature detecting fuel level detector for detecting in a digital manner the liquid level by connecting the spontaneously heated sensing resistors in parallel;

Fig. 8 is a circuit diagram for use in the detector shown in Fig. 6;

Fig. 9A is a view which illustrates the characteristics of the differential output voltage which can be generated from bridge circuits formed such that both of the temperature detecting resistos are dipped in the fuel;

Fig. 9B is a view which illustrate the characteristics of the differential output voltage which can be generated from bridge circuits formed such that one of the temperature resistors is exposed to air.

DESCRIPTION OF THE PREFERRED EMBODIMENTS

First Example

Figs. 2A and 2B are views which illustrate the structures of the pattern of a temperature detecting resistor disposed in a detection portion of a fuel level detector according to an embodiment of the present invention. Referring to Fig. 2, reference numeral 1 represents an insulating ceramic substrate serving as a substrate. Reference numeral 2 represents an $SiO_2$-$Al_2O_3$-$B_2O_3$ group underglazed glass having a softening point of 920°C with which the ceramic substrate 1 is coated. Reference numeral 3 represents a spontaneously heated sensing resistor having a high temperature resistance coefficient and formed on the underglazed glass 2 by means of printing and baking. Reference numeral 4 represents a temperature compensating resistor made of the same material as that of the spontaneously heated sensing resistor 3, and having substantially the same length. According to this embodiment, platinum metallo-organic paste obtained by adding a binder such as resin acid, its modified form or the like to a platinum salt of sulfide or mercaptide of dimer to pentmer of terpenes is used to print a desired pattern before it is baked at 900°C, whereby a platinum thin foil temperature detecting resistor body substantially 4,000 Å thick is formed. The spontaneously heated temperature, detecting resistor body displays a resistance value of 20 Ω at 0°C, while the temperature compensating resistor displays 5 kΩ at the same temperature, and the above two types of resistors display the same temperature resistance coefficient of substantially 3,700 ppm/°C. Reference numeral 5 represents an output electrode having a relatively low conductor resistance and made of, according to this embodiment, silver palladium (substantially 15 μm in thickness).

The above described temperature detecting resistors 3 and 4 and the electrode 5 are coated with a borosilicate lead group overcoat glass film 6 as a protection coating for the purpose of providing oil resistance, chemical resistance, and insulation.

Fig. 3 is a view which illustrates a state wherein a pair of elements consisting of a first temperature detecting element 7 including the spontaneously heated sensing resistor and a second temperature detecting element 8 including the temperature compensating resistor are disposed in a fuel pump unit 9 provided in a fuel tank. These elements are electrically connected to each other through a circuit shown in Fig. 4. Referring to this drawing, reference numeral 11 represents the detection portion shown in Fig. 2 and comprises the spontaneously heated sensing resistor 12 and the temperature compensating resistor 13 shown in Fig. 2. These resistors are connected to the corresponding resistors 14 and 15 whereby resistance bridge circuits are formed.

The outputs of these bridge circuits are connected to the corresponding inverting input terminal and a non-inverting input terminal of an operation amplifier 16 via the corresponding resistors 17 and 18, this operation amplifier 16 forming a differential amplifier circuit. Reference numeral 19 represents a resistor.

That is, in the above described circuit, the resistance value of the sensing resistor 12 which spontaneously heats at a predetermined voltage or a predetermined current, varies according to the fuel level. Such changes in resistance value are inputted as a change in the potential at the output of the bridge circuit, to the differential amplifier circuit. This differential amplifier circuit outputs at the output terminal thereof any difference in voltage so that any change in the fuel level can be outputted as a change in voltage.

Furthermore, since the temperature compensating resistor 13, is thermally separated from the spontaneously heated sensing resistor 12, the heat which has been spontaneously given by the spontaneously heated sensing resistor 12 is prevented from being transmitted to the temperature compensating resistor 13.

Therefore, since the temperature compensating function of the temperature compensating resistor 13 with respect to the ambient temperature in the gasoline tank can be properly effected, the fuel level can be accurately detected.

Similarly to this embodiment, a metallic organism of gold, silver, ruthenium, and palladium may be used to form a metal or metal oxide thin film which can serve as a temperature detecting resistor. Although the spontaneously heated sensing resistor and the temperature compensating resistor are formed on individual substrates according to this example, they may, as shown in Fig. 5, be formed on one substrate if necessary.

Example 2

Paste preparated by mixing a nickel metallic organic substance such as nickel octanate and ferrous metallic organic substance such as octylic acid salt of steel at a 9 : 1 ratio, and then by adding modified rosin or the like as a binder, is used to form the spontaneously heated sensing resistor and the temperature compensating resistor shown in Fig. 2 by means of screen printing. The thus-printed paste is baked in air at 620°C, and then baked for deoxidation at 550°C in a deoxidation atmosphere, whereby a nickel-steel thin film substantially 2,000 Å thick and displaying a temperature resistance coefficient of substantially 4,500 ppm/°C is obtained. Then, a temperature detecting element prepared by applying a borosilicate overglass coat to the above nickel-steel thin film at 600°C in an atmosphere of nitrogen is used similarly to the example 1.

Also similarly to this example, copper metallic organic substances may be used to form a copper thin film which can serve as a heated sensing resistor.

Example 3

Since the spontaneously heated sensing resistor and the temperature compensating resistor shown in Fig. 2 are formed by a nickel boron thin film obtained from an electroless nickel boron plating, it can be heat-aged by forming the borosilicic overcoat glass at 600°C in an atmosphere of nitrogen, causing the sintered tightness to be improved. As a result, a nickel boron thin film substantially 2,500 Å and displaying a temperature resistance coefficient of 4,200 ppm/°C is formed.

If necessary, electric plating may be applied.

Then, also the thus-formed temperature detecting element can be used in a manner similar to that of Example 1.

Similarly to this example, a resistance thin film serving as a heated sensing resistor may be made of platinum, gold, silver, palladium, copper, chrome cobalt, steel, or an alloy plating film which mainly contains thereof.

If the temperature resistance coefficient of the spontaneously heated sensing resistor and that of the temperature compensating resistor are the same, an ideal fuel level detection can be conducted. However, it is difficult for the two temperature resistance coefficients to be made equal to each other in practice. In terms of the practical use, no problem cannot arise if the difference between the above two coefficients is 500 ppm/°C or less. It leads to a fact that the material for the spontaneously heated sensing resistor and the same for the temperature compensating resistor do not need to be the same material. However, it is preferable for the length of the temperature compensating resistor to be the same as that of the spontaneously heated sensing resistor. However, this does not apply to a case wherein design of the pattern for a temperature detecting resistor body requires for the two components to have individual lengths.

Example 4

Figs. 6A and 6B are views which illustrate detection portions of the fuel level detector according to another example of the present invention.

Referring to Fig. 6, reference numeral 20 represents a 50 μm thick substrate made of a polyimide film, a conductor 21 in the form of a predetermined circuit pattern being formed on this substrate 20. Reference numeral 22 represents a spontaneously heated platinum sensing resistor chip obtained from the following steps: platinum metallo-organic paste is printed on an underglazed forsterite substrate before it is baked at 900°C; electrode paste which mainly contains silver is printed in the form of a primary electrode; this printed primary electrode is baked at 600°C, and a borosilicic lead overcoat glass is layered these over. The thus- prepared chip displays a temperature resistance coefficient 3,700 ppm/°C and a resistance value of 1.0 Ω at 0°C. Reference numeral 23 represents a temperature compensating platinum resistor chip prepared by the same method as that for the spontaneously heated sensing resistor chip, and displaying a temperature resistance coefficient of 3,700 ppm/°C and a resistance value of 50 Ω at 0°C. A fuel level detection exhibiting an excellent thermal response and improved accuracy can be conducted by employing the thus-formed spontaneously heated sensing resistor and the temperature compensating resistor with the above-two resistors connected to the circuit shown in Fig. 4 similarly to Example 1.

Although the spontaneously heated sensing resistor chip and the temperature compensating resistor chip are mounted on individual substrates in this example, the above two chips may be mounted on one substrate. As an alternative to the temperature compensating resistor comprising a group consisting of resistors in the form of chips in this example, a temperature compensating resistor formed, as shown in Fig. 2B, on a ceramic substrate may be employed.

Example 5

Fig. 7 is a view which illustrates the pattern of the sensing resistor in the detection portion of the fuel level detector according to other example of the present invention. Referring to Fig. 7, reference numeral 24 represents a ceramic substrate serving as a substrate. Reference numeral 25 represents thin elongated film shaped spontaneously heated sensing resistors displaying a relatively high temperature resistance coefficient and formed on the ceramic substrate 24 by printing and baking, theses resistors comprising this film platinum resistors 4,000 Å thick obtained by baking platinum metallic organic paste in air at 900°C and displaying a temperature resistance coefficient 3,700 ppm/°C. The thus-obtained thin wire shaped sensing resistors 25 are arranged in a plurality of stages in parallel to the fuel level. According to this example, a total of 13 sensing resistors 25 are formed at the positions which divide the amount of the residual fuel into 12 portions. Although the sensing resistos are arranged to be in parallel to the fuel level in this example, they may be arranged at a predetermined angle with respect to the fuel level, if necessary. The thus-arranged sensing resistors 25 are connected through thick film shaped electrodes (a mean thickness substantially 15 μ) 26 made of silver palladium and displaying a relatively low conductor resistance, whereby a parallel resistor circuit is structured. Reference numeral 27 represents output electrodes disposed at end portions of the sensing resistors 25, chip resistors 29 displaying a relatively low temperature coefficient being mounted on these output electrodes 27, and a flexible substrate 31 on which a signal line 30 is formed on the reverse side thereof being secured to these output electrodes 27 via the through holes 32 by soldering for the purpose of detecting a change in the differential output voltage. Furthermore, the sensing resistors 25 and the electrodes 26 are formed there over with a borosilicic lead overcoat glass film 28 for the purpose of providing oil resistance and chemical resistance.

Fig. 8 is a view which illustrates a circuit for use in the fuel level detector in which the detection portion shown in Fig. 7 is employed. Referring to this drawing, reference numeral 33 represents a detection portion. Twelve spontaneously heated sensing resistors 34 which are in parallel connected to each other and resistors 36 to be in series connected to these sensing resistors 34 and displaying a relatively low temperature resistance coefficient respectively form resistor bridge circuits in association with a sensing resistor 35 disposed at the lowermost position of the detection portion 33 and a resistors 37 to be in series connected to this sensing resistor 35. The sensing resistors 34 and 35 display substantially the same temperature resistance coefficient, more preferably, they have the same resistance value.

The output ends of this bridge circuits are respectively connected to inverting input terminals and non-inverting input terminals of the operation amplifier 38 forming the differential amplifier circuit.

That is, according to this circuit, the bridge circuit formed by a sensing resistor consisting of the sensing resistor 35 which is always dipped into fuel and displaying small change in the resistance value due to its spontaneous heat and the one, of the sensing resistors 34 which is dipped in fuel does not output any differential output voltage as shown in Fig. 9A. However, the bridge circuit formed by the sensing resistor 35 and the sensing resistors which are exposed to in air instantaneously outputs a differential output voltage as shown in Fig. 9B. The thus-output differential output voltage is amplified by the operation amplifier 38, and then the number X of the sensing resistors from which any differential output voltage did not output is counted by an arithmetic portion 39.

If X is 5, for example, the level of the remaining fuel is 5/12 of the fuel capacity of the fuel tank.

Thus, the fuel detection is conducted. In the temperature detecting fuel level detector according to the present invention, only the fact that whether or not the differential output voltage generates is detected, and the absolute value of the differential output voltage is not detected intact. Therefore, fuel levels can be instantaneously obtained without any necessity of waiting the fact that the differential output voltage attains a constant level. Furthermore, thanks to the thus-improved responsibility, electricity does not need to be always supplied to this temperature detecting fuel level detector. For example, the fuel level can be detected simply by supplying an operation voltage Vcc or a predetermined current I at a two minutes interval. As a result, the power to be consumed by the temperature detecting fuel level detector according to the present invention can be significantly reduced, in addition, the relability of the detecting element can be improved.

In this embodiment, although a fuel level is detected by making a comparison between the sensing resistors which are always dipped into fuel and the remainders, it may be detected by making a comparison between the sensing resistors which always is exposed to air and the remainders.

Furthermore, according to this embodiment, a chip resistor is employed as to serve as the resistors having a relatively low temperature resistance coefficient. As an alternative, it may be formed on the ceramic substrate by printing and baking a glazed resistor made of ruthenium oxide.

As described above, according to the present invention, the sensing resistors each capable of indicating a fuel level which corresponds to the shape of the fuel tank are arranged in a pattern, and therefore fuel level accurately detected. In addition, a fuel level in different form fuel tanks can be readily detected. In addition, a significantly improved response to the temperature detection at each fuel level can be obtained by disposing the spontaneously heated sensing resistor and the temperature compensating resistor so as to thermally isolate from each other. Even if the ambient temperature in the fuel tank is varied, the correction can be automatically conducted, and since the fuel detector according to the present invention is of a temperature detecting type, a detection can be conducted without any occurrence of significant difference with respect to the types of the gasoline. Furthermore, since the sensing resistor is coated with an overcoat glass which exhibits improved tightness and stability, it can remain its reliability and quality for a long time even if the same would be dipped in fuel containing an additive such as alcohol and sulfide. If a plating method or metallic organic paste is employed, a desired thin film pattern of the sensing resistor can be readily formed by means of printing and baking. Therefore, any material loss is caused, and the etching process involved in the spattering method becomes needless, causing an improvement in manufacturing yield and a reduced cost fuel level detector.

In addition, a temperature detecting fuel level detector formed by mounting a chip-shaped temperature detecting element on a substrate comprising, for example, an epoxy glass substrate can be readily used in a large sized-fuel tank having a substrate of 50 cm in length. Furthermore, it exhibits a reduced cost of the substrate with respect to a ceramic substrate and a raised detection speed thanks to its relatively small thermal capacity. Consequently, a significant advantage can be obtained in the subject industry.

As described above, according to the present invention, the sensing resistors each capable of indicating a fuel level which corresponds to the shape of the fuel tank are arranged in a pattern, and therefore a fuel level can be significantly accurately detected. In addition, a fuel level in different form fuel tanks can be readily detected. Consequently, a significant advantage can be obtained in the subject technical field.

What We Claim is

1. A temperature detecting fuel level detector characterized in that: spontaneously heated sensing resistor (3, 25) having a relatively high temperature resistance coefficient and a relatively small resistance value and a temperature compensating resistor (4) having substantially the same temperature resistance coefficient as that of said spontaneously heated resistor and a relatively large resistance value are formed on a substrate (20), wherein a change in the resistance value of said sensing resistor due to cooling by heat of vaporization at a portion of said sensing resistor which is dipped in fuel is detected as a differential output voltage, whereby the level of liquid can be detected.

2. A temperature detecting fuel level detector characterized by comprising: a first temperature detecting element whose spontaneously heated sensing resistor having a relatively high temperature resistance coefficient is formed on a substrate (20) and capable of detecting a change in the sensing resistor value as a differential output voltage due to cooling by heat of vaporization at a portion of said sensing resistor which is dipped in fuel; and a second temperature detecting element (8) whose temperature compensating resistor (4) having substantially the same temperature resistance coefficient as that of said spontaneously heated sensing resistor (3, 25) is formed on said substrate (20).

3. A temperature detecting fuel level detector

according to claim 2, wherein said first temperature detecting element is structured by mounting one or a plurality of said spontaneously heated sensing detecting resistors on said substrate, said spontaneously heated sensing resistor having a relatively high temperature resistance coefficient and being formed on a chip-shaped insulating substrate.

4. A temperature detecting fuel level detector according to claim 1 or 2, wherein the length of said spontaneously heated sensing resistor and that of said temperature compensating resistor are substantially the same.

5. A temperature detecting fuel level detector characterized by comprising: a first temperature detecting element (7) structured by mounting one or a plurality of spontaneously heated sensing resistors (3, 25) on a substrate (20), said spontaneously heated sensing resistors being formed on a chip shaped insulating substrate, having a relatively high temperature resistance coefficient, and capable of detecting a change in the resistance value of said sensing resistor due to cooling by heat of vaporization at a portion of said sensing resistor which is dipped in fuel as a differential output voltage; and a second temperature detecting element structured by mounting a temperature compensating resistor (4) on a substrate (20), said temperature compensating resistor having substantially the same temperature resistance coefficient as that of said spontaneously

heated sensing detecting resistor and being formed on a chip-shaped insulating substrate.

6. A temperature detecting fuel level detector according to claim 5, wherein said first sensing element and said temperature detecting element are mounted on one substrate.

7. A temperature detecting fuel level detector characterized in that: said temperature detecting fuel level detector is structured by separately arranging a plurality of spontaneously heated sensing resistors (3, 25) which radiate heat with supplied electricity and having a relatively high temperature resistance coefficient so as to form a multiplicity of storage, by connecting in series resistors having a relatively low temperature resistance coefficient to each of said sensing resistors, and by connecting in parallel the thus-in series-connected resistor groups, wherein a change in the resistance value of said sensing resistor due to cooling by heat of vaporization at the portion of said sensing resistor which is dipped in fuel is detected as a differential output voltage, whereby the level of liquid can be detected.

8. A temperature detecting fuel level detector according to claim 7, wherein said spontaneously heated sensing resistor having a relatively high temperature resistance coefficient comprises a sensing resistor which has been previously formed on a chip-shaped insulating substrate, and said sensing resistor is a sensing resistor mounted on a substrate.

9. A temperature detecting fuel level detector according to claim 1, 2, 5 or 7, wherein said spontaneously heated sensing resistor and said temperature compensating resistor comprise film resistors made of platinum, gold, silver, palladium, ruthenium oxide, copper, nickel, steel, chrome, cobalt or an alloy composition of these materials.

10. A temperature detecting fuel level detector according to claim 9, wherein said spontaneously heated sensing resistor and said temperature compensating resistor are formed by coating or baking after printing a metallic organic substance of platinum, gold, silver, palladium, ruthenium oxide, copper, nickel, steel, chrome, cobalt or an alloy composition of these materials.

11. A temperature detecting fuel level detector according to claim 1, 2, 5, or 7, wherein the surface of said spotaneously heated sensing resistor and said temperature compensating resistor is protected by an insulating material such as glass or resin.

FIG. 1

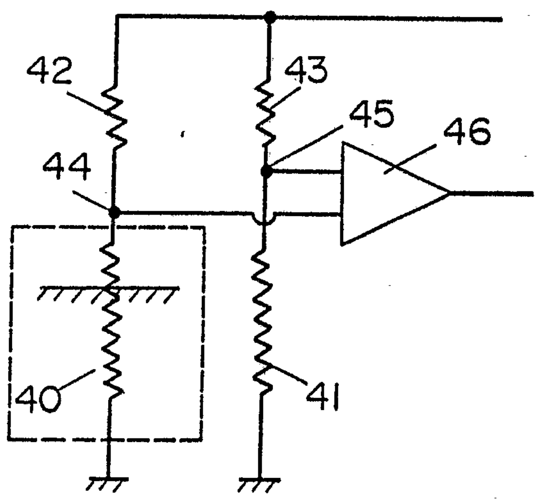

FIG. 2

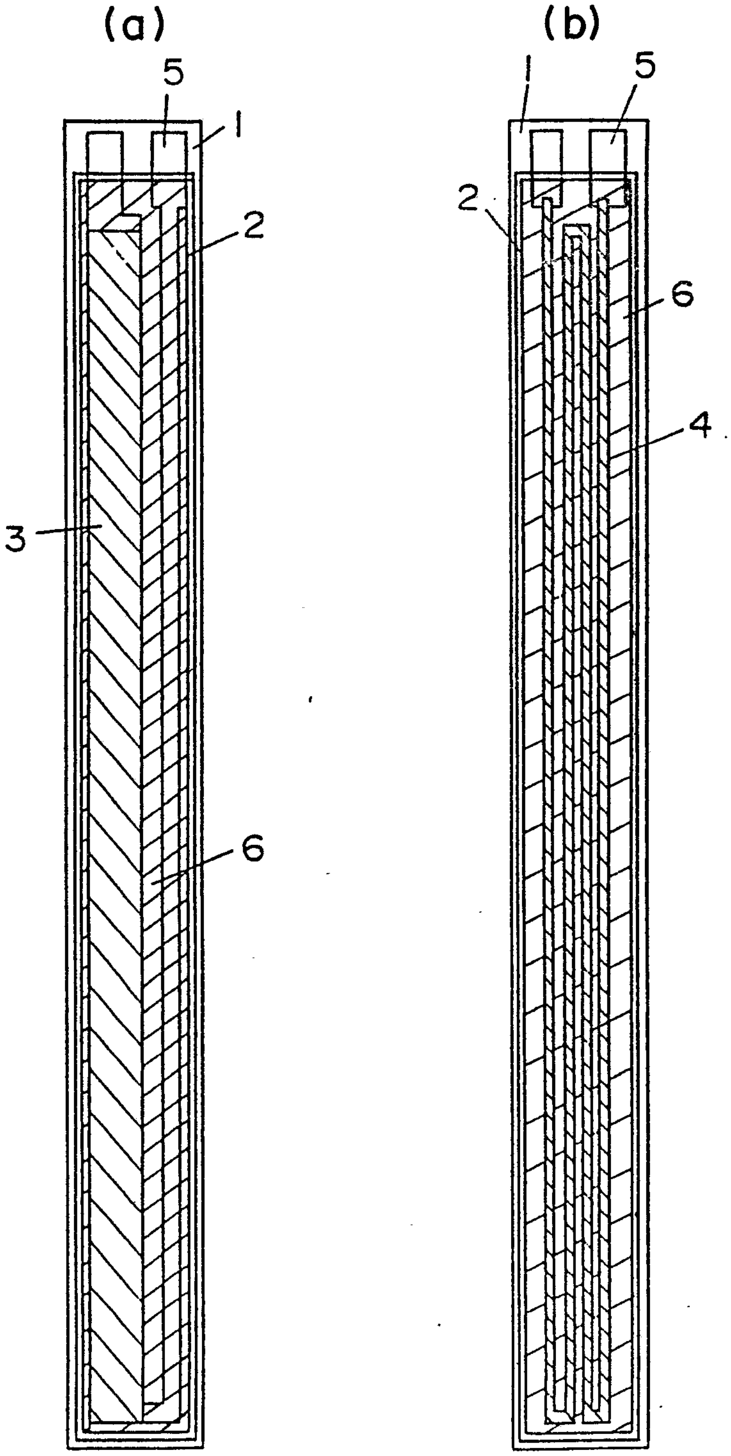

FIG. 3

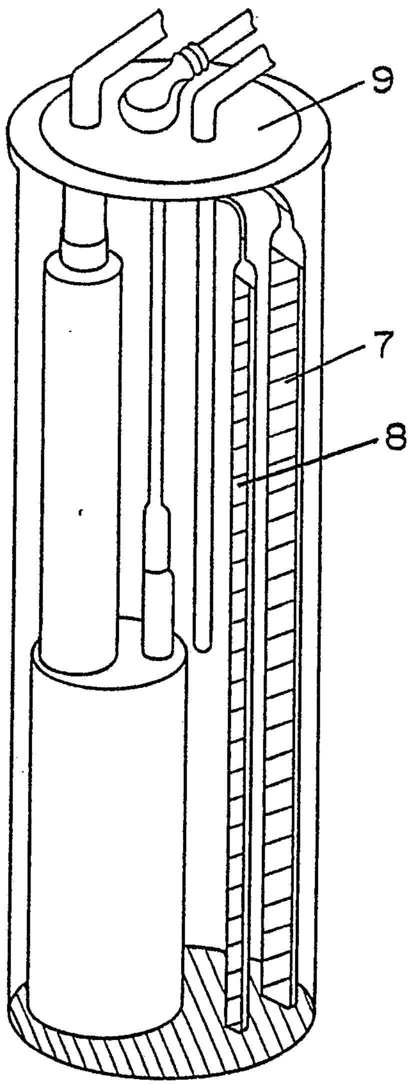

FIG. 4

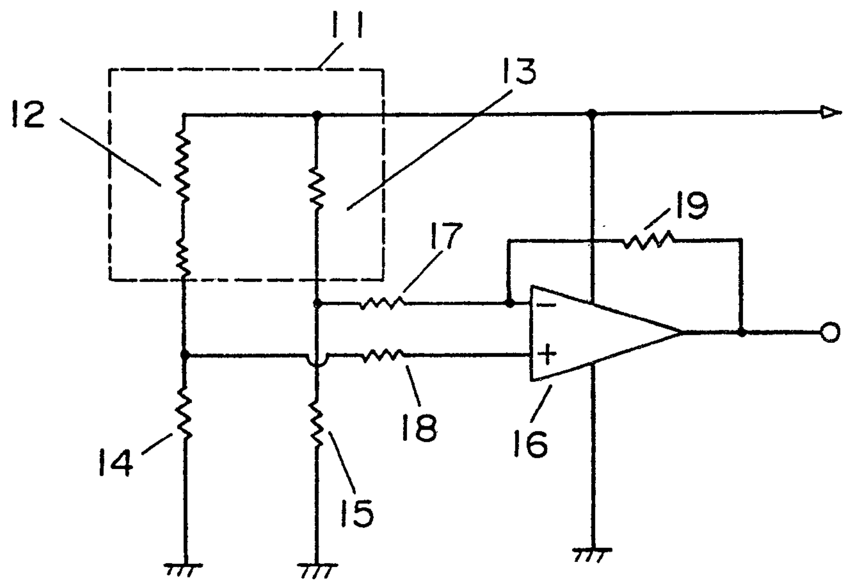


FIG. 5

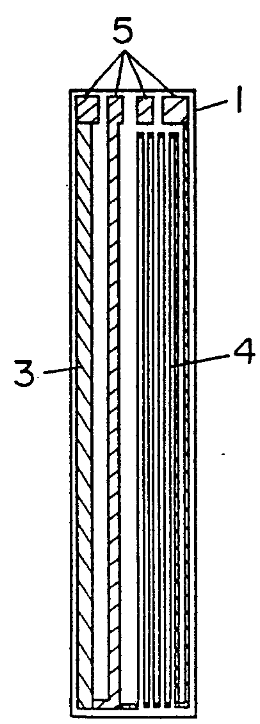

FIG. 6

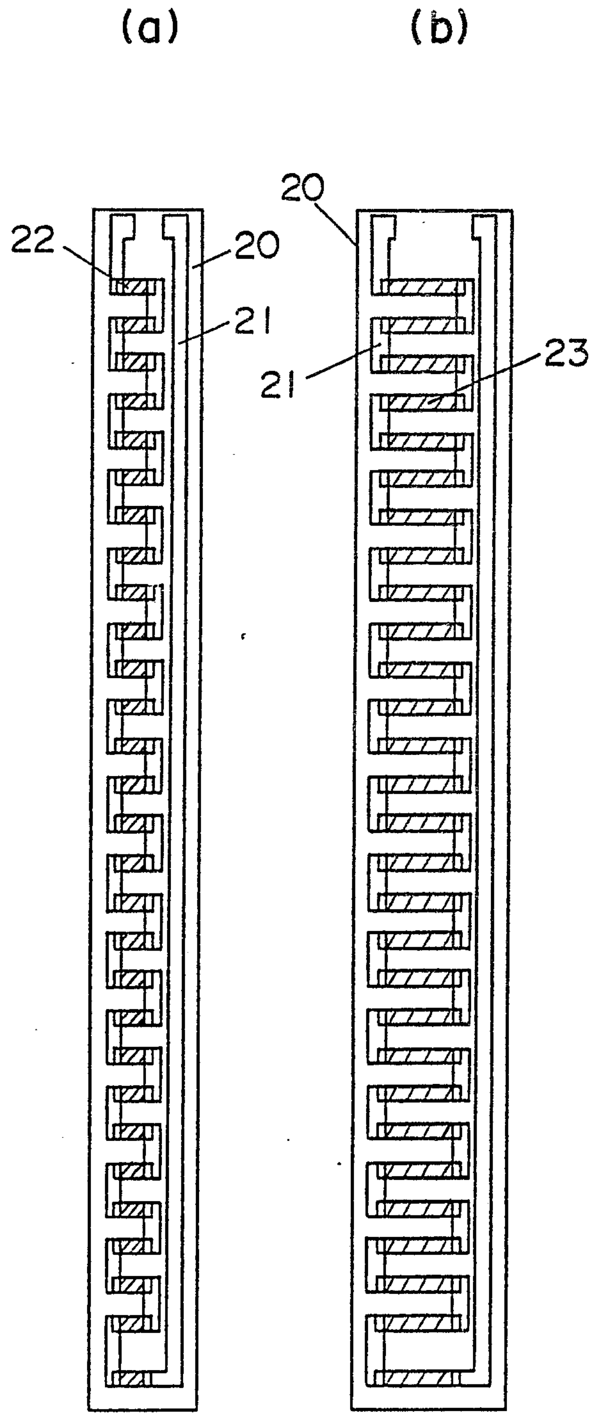

FIG. 7

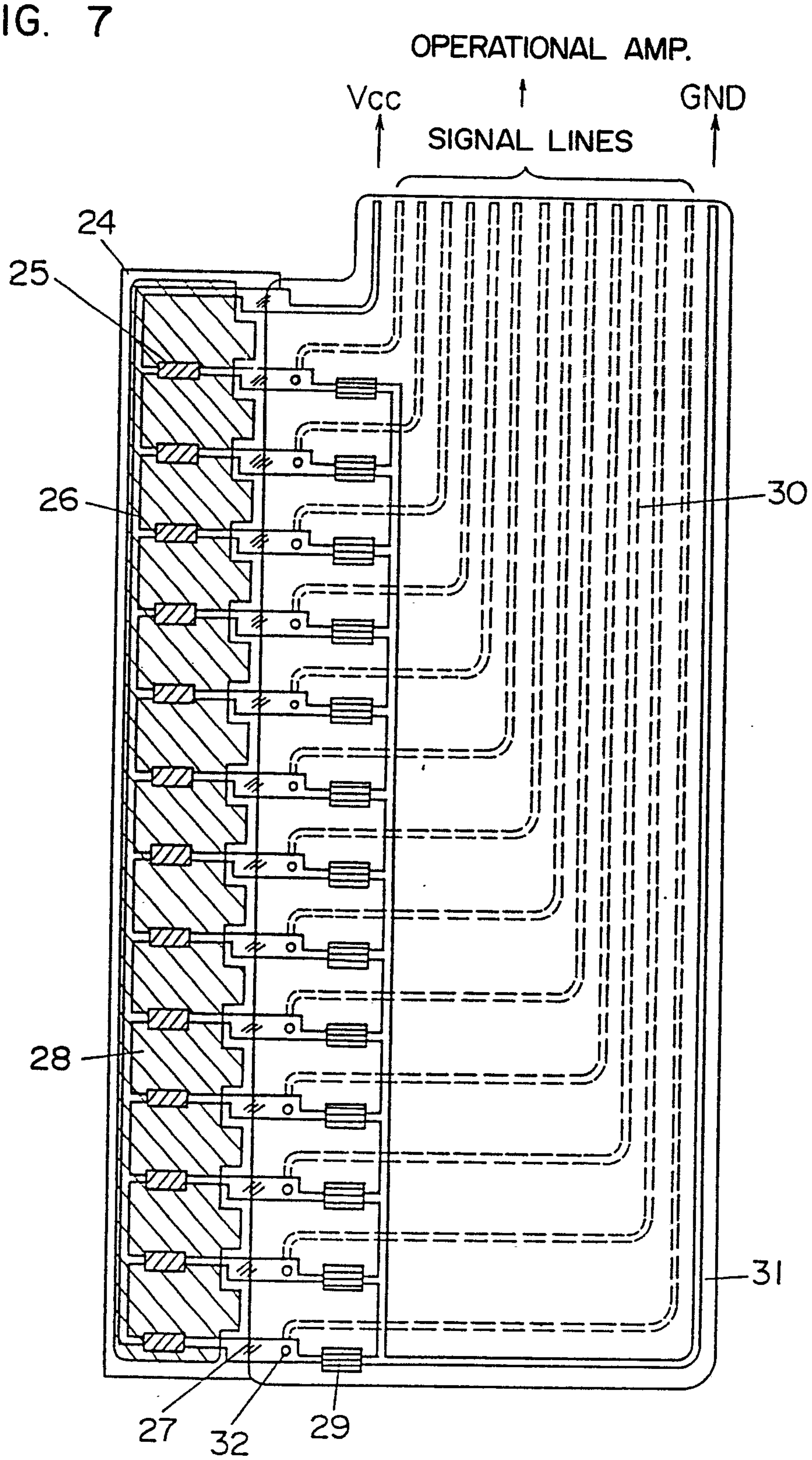

FIG. 8

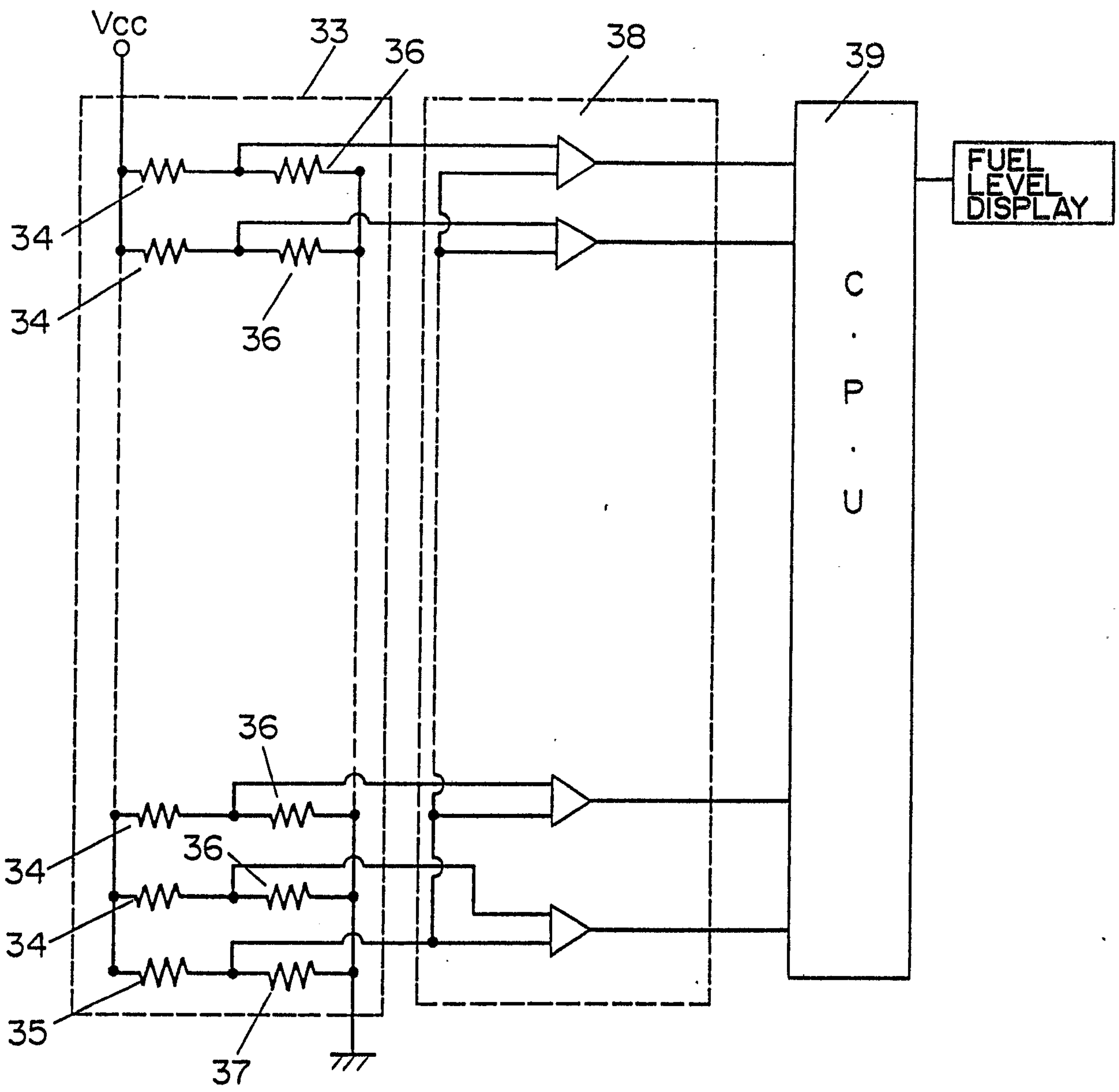

FIG. 9

(a)

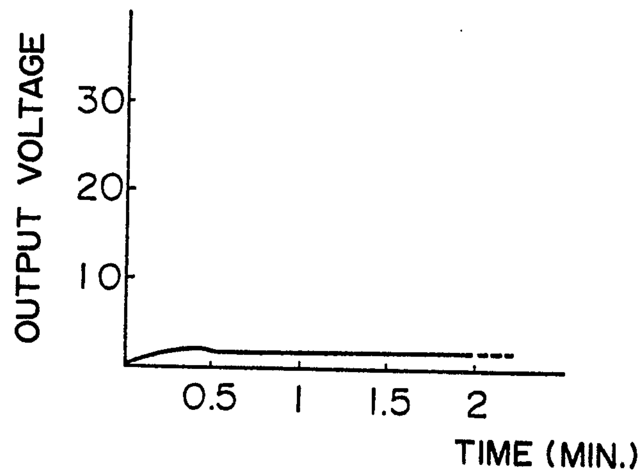
OUTPUT VOLTAGE
30
20
10
0.5
1
1.5
2
TIME (MIN.)

(b)

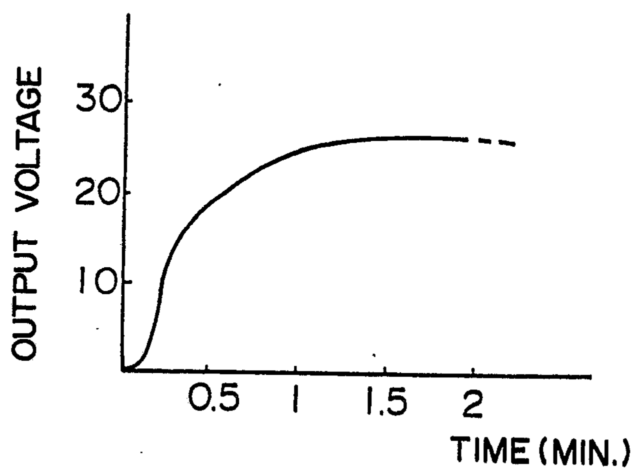
OUTPUT VOLTAGE
30
20
10
0.5
1
1.5
2
TIME (MIN.)

| | | |
|---|---|---|
| 1, 24 | ... | ceramic substrate |
| 2 | ... | underglazed glass |
| 3, 25 | ... | spontaneously heat sensing temperature resistor |
| 4 | ... | temperature compensating temperature detecting resistor |
| 5, 26, 27 | ... | electrode |
| 6, 28 | ... | overcoat glass film |
| 7 | ... | first temperature detecting element |
| 8 | ... | second temperature detecting element |
| 9 | ... | fuel pump unit |
| 11, 33 | ... | detection portion |
| 12, 34 | ... | spontaneously heated sensing resistor |
| 13 | ... | temperature compensating resistor |
| 14, 15, 17, 18, 19, 36, 37 | ... | resistor |
| 16, 38 | ... | operation amplifier |
| 20 | ... | substrate |
| 21 | ... | conductor |
| 22 | ... | spontaneously heated sensing resistor chip |
| 23 | ... | temperature compensating platinum resistor chip |
| 29 | ... | chip resistor |
| 30 | ... | signal line |
| 31 | ... | flexible substrate |
| 32 | ... | through hole |

| | | |
|---|---|---|
| 35 | ... | temperature detecting resistor |
| 39 | ... | arithmetic portion |
| 40 | ... | spontaneously heated sensing resistance wire |
| 41 | ... | temperature compensating resistance wire |
| 42, 43 | ... | resistor |
| 44, 45 | ... | conjunction |
| 46 | ... | differential amplifier |

0340309

# INTERNATIONAL SEARCH REPORT

International Application No PCT/JP88/00997

**I. CLASSIFICATION OF SUBJECT MATTER** (if several classification symbols apply, indicate all) [6]

According to International Patent Classification (IPC) or to both National Classification and IPC

Int.Cl$^4$ G01F23/22

**II. FIELDS SEARCHED**

Minimum Documentation Searched [7]

| Classification System | Classification Symbols |
|---|---|
| IPC | G01F23/22 |

Documentation Searched other than Minimum Documentation to the Extent that such Documents are Included in the Fields Searched [8]

| | |
|---|---|
| Jitsuyo Shinan Koho | 1929 - 1988 |
| Kokai Jitsuyo Shinan Koho | 1973 - 1988 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, Y2, 55-895 (Nakaasa Sokki Kabushiki Kaisha) 11 January 1980 (11. 01. 80) (Family: none) | 1-4, 9, 10, 11 |
| Y | JP, A, 58-191927 (Ricoh Co., Ltd.) 9 November 1983 (09. 11. 83) (Family: none) | 1-11 |
| Y | JP, A, 50-89068 (Toyota Motor Corporation) 17 July 1975 (17. 07. 75) Figs. 5, 6, 7, 9, 10 (Family: none) | 3-8 |
| Y | JP, A, 62-102120 (Honda Motor Co., Ltd.) 12 May 1987 (12. 05. 87) Figs. 1, 8 (Family: none) | 3, 5, 6-11 |
| A | JP, A, 49-40768 (Hitachi, Ltd.) 16 April 1974 (16. 04. 74) Column 5, lines 12 to 19 (Family: none) | 11 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 17, 1988 (17. 10. 88) | November 14, 1988 (14. 11. 88) |
| **International Searching Authority** | **Signature of Authorized Officer** |
| Japanese Patent Office | |

International Application No. PCT/JP88/00997

FURTHER INFORMATION CONTINUED FROM THE SECOND SHEET

| | |
|---|---|
| JP, U, 57-151534 (Matsushita Electric Ind. Co., ltd.) 22 September 1982 (22. 09. 82) (Family: none) | 1-11 |

V.☐ OBSERVATIONS WHERE CERTAIN CLAIMS WERE FOUND UNSEARCHABLE[10]

This international search report has not been established in respect of certain claims under Article 17(2) (a) for the following reasons:

1.☐ Claim numbers.............because they relate to subject matter[12] not required to be searched by this Authority, namely:

2.☐ Claim numbers.............because they relate to parts of the international application that do not comply with the prescribed requirements to such an extent that no meaningful international search can be carried out[13], specifically:

VI.☐ OBSERVATIONS WHERE UNITY OF INVENTION IS LACKING[11]

This international Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.